(19) Europäisches Patentamt
European Patent Office
Office européen des brevets

(11) Veröffentlichungsnummer: **0 080 165**
**B1**

# (12) EUROPÄISCHE PATENTSCHRIFT

(45) Veröffentlichungstag der Patentschrift: **18.07.84**

(51) Int. Cl.³: **C 09 D 5/40,** C 09 D 3/48

(21) Anmeldenummer: **82110627.5**

(22) Anmeldetag: **18.11.82**

## (54) Lackbindemittel für die kathodische Elektrotauchlackierung und ihre Verwendung.

(30) Priorität: **25.11.81 DE 3146640**

(43) Veröffentlichungstag der Anmeldung: **01.06.83 Patentblatt 83/22**

(45) Bekanntmachung des Hinweises auf die Patenterteilung: **18.07.84 Patentblatt 84/29**

(84) Benannte Vertragsstaaten: **AT BE DE FR GB NL**

(56) Entgegenhaltungen: **DE - A - 2 357 075**

(73) Patentinhaber: **BASF Aktiengesellschaft, Carl-Bosch-Strasse 38, D-6700 Ludwigshafen (DE)**

(72) Erfinder: **Schupp, Eberhard, Dr., Tilsiter Weg 4, D-6830 Schwetzingen (DE)**
Erfinder: **Kempter, Fritz Erdmann, Dr., L 2,14, D-6800 Mannheim (DE)**

**EP 0 080 165 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europaische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

**Beschreibung**

Die Erfindung betrifft Lackbindemittel für die kathodische Elektrotauchlackierung auf Basis stickstoffbasische Gruppen tragender Polyadditions-, Polymerisations- und Polykondensationsprodukten, die durch Protonierung mit Säure wasserverdünnbar sind.

Aus der DE-OS 2 357 075 sind kathodisch abscheidbare Elektrotauchlackbindemittel bekannt, die durch Umsetzung von phenolischen Mannichbasen mit Epoxidharzen hergestellt werden.

In der DE-OS 2 942 488 werden stickstoffbasische Gruppen tragende Polyadditionsprodukte beschrieben, die zur Vernetzung beim Einbrennen befähigte, an aromatische Ringe gebundene Gruppierungen der allgemeinen Formel (I)

$$-CH_2-NH-\overset{\overset{\displaystyle O}{\|}}{C}-CR^1{=}CHR^2 \qquad (I)$$

enthalten, wobei $R^1$ und $R^2$ untereinander gleich oder verschieden sind und für Wasserstoff oder eine Methylgruppe stehen. Auch derartige Polyadditionsprodukte sind als Bindemittel für die kathodische Elektrotauchlackierung geeignet.

In der deutschen Patentanmeldung P 3 124 088.7 werden Badzusammensetzungen für die kataphoretische Elektrotauchlackierung vorgeschlagen, welche sowohl phenolische Mannichbasen als auch an aromatische Ringe gebundene Gruppierungen der allgemeinen Formel (I) enthalten.

Allen diesen Produkten ist gemeinsam, daß sie einen hohen Anteil an Epoxidharzen eingebaut enthalten. Die eingebrannten Lackfilme zeichnen sich durch eine gute Metallhaftung und einen guten Korrosionsschutz aus, sind jedoch etwas spröde.

Ein Ziel der vorliegenden Erfindung ist es, Bindemittel für die kathodische Elektrotauchlackierung aufzuzeigen, die Lackfilme mit einer verbesserten Elastizität und Schlagfestigkeit ergeben. Dieses Ziel wurde durch Mitverwendung spezieller Amidamine erreicht.

Gegenstand der vorliegenden Patentanmeldung sind Lackbindemittel für die kathodische Elektrotauchlackierung auf Basis stickstoffbasische Gruppen tragender Polyadditions-, Polymerisations- und/oder Polykondensationsprodukte, die durch Protonierung mit Säure wasserverdünnbar und dadurch gekennzeichnet sind, daß das Lackbindemittel besteht aus einem Gemisch aus

(A) 50 bis 95 Gewichtsprozent eines oder mehrerer stickstoffbasische Gruppen tragender Polyadditions-, Polymerisations- und/oder Polykondensationsprodukte, und
(B) 50 bis 5 Gewichtsprozent eines oder mehrerer Amidamine, die durch Umsetzung von Monocarbonsäuren mit 6 bis 24 Kohlenstoffatomen und/oder Dicarbonsäuren mit 4 bis 48 Kohlenstoffatomen oder deren Estern mit Diaminen, die pro Molekül eine primäre und eine sekundäre Aminogruppe tragen, wobei die sekundäre Aminogruppe eine $\beta$-Hydroxialkylgruppe trägt, erhalten worden sind,

mit der Maßgabe, daß das stickstoffbasische Gruppen tragende Polyadditions-, Polymerisations- und/oder Polykondensationsprodukt (A) aus

($A_1$) einer oder mehreren phenolischen Mannichbasen, die erhalten wurden aus

a) Mono- und/oder Polyphenolen,
b) mindestens einem primären oder sekundären Amin, und
c) Formaldehyd oder einer formaldehydliefernden Verbindung,

und die gegebenenfalls mit Epoxidharzen umgesetzt wurden, und/oder

($A_2$) einem oder mehreren Polyadditions-, Polymerisations- und/oder Polykondensationsprodukten mit aktivierten C-C-Doppelbindungen, wobei diese Doppelbindungen ganz oder teilweise durch Anlagerung von sekundären Aminen blockiert sein können, besteht,

wobei anstelle des Gemisches aus (A) und (B) auch Umsetzungsprodukte der Komponente (B) mit Komponente (A) oder Vorprodukten der Komponente (A) verwendet werden können.

Gegenstand der vorliegenden Erfindung ist außerdem die Verwendung der erfindungsgemäßen Lackbindemittel für die kathodische Elektrotauchlackierung von Metallteilen.

Die erfindungsgemäßen Lackbindemittel lassen sich sehr vorteilhaft verarbeiten, ergeben stabile Elektrotauchbäder mit hohem Umgriff und hoher Spannungsfestigkeit sowie Überzüge mit sehr guten mechanischen Eigenschaften, insbesondere hoher Zähigkeit und Elastizität.

Zu den Aufbaukomponenten der erfindungsgemäßen Lackbindemittel ist im einzelnen folgendes auszuführen.

Als Komponente (A) eignen sich stickstoffbasische Gruppen tragende Polyadditions-, Polymerisations- und/oder Polykondensationsprodukte, die aus

($A_1$) einer oder mehreren phenolischen Mannichbasen, die erhalten wurden aus

a) Mono- und/oder Polyphenolen,
b) mindestens einem primären oder sekundären Amin, und
c) Formaldehyd oder einer formaldehydliefernden Verbindung

und die gegebenenfalls mit Epoxidharzen umgesetzt wurden, und/oder

($A_2$) einem oder mehreren Polyadditions-, Polymerisations- und/oder Polykondensationsprodukten mit aktivierten C-C-Doppelbindungen, wobei diese Doppelbindungen ganz oder teilweise durch Anlagerung von sekundären Aminen blockiert sein können, bestehen.

Als Komponente ($A_1$) eignen sich beispielsweise Produkte gemäß der DE-OS 2 357 075. Derartige Produkte werden beispielsweise so hergestellt, daß in einer ersten Stufe ein kondensiertes Phenol, vorzugsweise 2,2-Bis-[4-hydroxyphenyl-]propan (Bisphenol A) mit mindestens einem sekundären Amin, das mindestens eine Hydroxyalkylgruppe trägt, oder einem Gemisch aus einem derartigen sekundären Amin mit einem anderen sekundären oder primären Amin und Formaldehyd oder einer Formaldehyd liefernden Verbindung umgesetzt wird. In einer zweiten Stufe wird dann mit Epoxidharzen, wie z. B. solchen auf Basis von Bisphenol A und Epichlorhydrin in einer Polyadditionsreaktion das Polymermolekül aufgebaut.

Weitere als Komponente ($A_1$) geeignete Produkte sind solche gemäß DE-OS 2 419 179. Diese ähneln denen der DE-OS 2 357 075, enthalten jedoch zusätzlich ethergruppenhaltige Phenole, die sich z. B. durch Umsetzung von Bisphenol A mit einem Unterschuß an Epoxidharzen herstellen lassen.

Weitere als Komponenten (A) geeignete Produkte, die sowohl die Merkmale der Komponente ($A_1$) als auch die der Komponente ($A_2$) aufweisen, sind z. B. solche, wie sie in den deutschen Patentanmeldungen P 3 124 089.5, P 3 124 088.7 und P 3 123 968.4 beschrieben sind. Derartige Produkte lassen sich herstellen, indem Mono- bzw. Polyphenole in einer Tscherniac-Einhorn-Reaktion mit N-Methylolacrylamid, N-Methylolmethacrylamid oder N-Methylolcrotonamid in Gegenwart von Säuren umgesetzt werden und anschließend ein oder mehrere sekundäre Amine in einer Michaeladdition an die Doppelbindungen addiert werden. Diese Phenole lassen sich anschließend in einer Mannichreaktion mit sekundärem Amin und Formaldehyd unter den für Mannichreaktionen üblichen Bedingungen, also bei Raumtemperatur oder leicht erhöhten Temperaturen bis etwa 120°C umsetzen, wobei Aminomethylgruppen in noch freie ortho- bzw. para-Stellungen der Phenolkerne eingeführt werden. Durch anschließende Umsetzung mit Epoxidharzen entstehen daraus Harze, die sich gut als Komponente ($A_1$) verwenden lassen.

Als Komponente ($A_2$) eignen sich allgemein solche C-C-doppelbindungshaltigen Polyadditions-, Polykondensations- oder Polymerisationsprodukte, deren Doppelbindungen durch benachbarte elektronenziehende Substituenten aktiviert sind. Beispiele für solche aktivierten Doppelbindungen sind acrylische, methacrylische oder crotonische Doppelbindungen, die über eine Amid- oder Estergruppe eingebaut sein können.

Derartige Produkte lassen sich z. B. gemäß der DE-OS 2 707 482 herstellen, indem man ein Harz, welches sowohl tertiäre Amino- als auch Hydroxylgruppen enthält, mit einem Diisocyanat umsetzt, welches vorher halbseitig mit z. B. Hydroxyethylacrylat umgesetzt worden war. Geeignete Produkte lassen sich auch dadurch herstellen, daß man die Epoxidgruppen eines Epoxidharzes teilweise mit Aminen und die restlichen Epoxidgruppen mit Acrylsäure oder Methacrylsäure umsetzt, wie z B in der DE-OS 2 429 527 und DE-OS 2 749 776 beschrieben.

Auch die sogenannten Vinylesterharze, die sich aus Epoxidharzen und Acrylsäure, Methacrylsaure oder dem Halbester aus Tetrahydrophthalsäure und Hydroxymethylmethacrylat herstellen lassen, können als Komponente ($A_2$) verwendet werden. Diese Vinylesterharze müssen basisch modifiziert werden, z. B. durch Anlagerung eines halbseitig mit einem eine tertiäre Aminogruppe tragenden Alkohol umgesetzten Diisocyanats.

Harze, deren aktivierte Doppelbindungen in Form von an aromatische Ringe gebundenen (Meth)-acrylamidomethylgruppen vorliegen, sind ebenfalls als Komponente ($A_2$) einsetzbar Die Herstellung solcher Harze ist in den DE-OS 2 942 488 und DE-OS 3 021 300.4 beschrieben.

Komponente (A) ist im erfindungsgemäßen Lackbindemittel in einer Menge von 50 bis 95, vorzugsweise 75 bis 90 Gewichtsprozent, bezogen auf die Gesamtmenge der Komponenten (A) + (B) enthalten.

(B) Als Amidamine (B) eignen sich solche, die durch Umsetzung von Monocarbonsäure mit 6 bis 24, vorzugsweise 10 bis 18 Kohlenstoffatomen und/oder Dicarbonsäuren mit 4 bis 48, vorzugsweise 6 bis 36 Kohlenstoffatomen oder Ester dieser Mono- oder Dicarbonsäuren mit Diaminen, die pro Molekül eine primäre und eine sekundäre Aminogruppe tragen, wobei die sekundäre Aminogruppe eine $\beta$-Hydroxyalkylgruppe trägt, erhalten worden sind. Derartige Amidamine lassen sich

beispielsweise durch einfaches Erhitzen der oben genannten Aufbaukomponenten auf Temperaturen von 100 bis 250° C unter Abspaltung von Wasser bzw. Alkohol herstellen.

Als Monocarbonsäuren kommen solche mit bis zu 24 Kohlenstoffatomen in Betracht, wobei, um gute elastifizierende bzw. plastifizierende Wirkungen zu erzielen, die Anzahl der Kohlenstoffatome mindestens 6 betragen soll. Beispiele für geeignete Monocarbonsäuren sind Capronsäure, Ethylhexansäure, Versaticsäure; besonders geeignet sind natürlich vorkommende Fettsäuren oder deren Hydrierungsprodukte wie z. B. Stearinsäure, Palmitinsäure, Ölsäure, Linolsäure, Linolensäure oder natürlich vorkommende Mischungen wie Sojafettsäure, Leinölfettsäure etc.

Als Dicarbonsäuren kommen solche mit 4 bis 48 Kohlenstoffatomen in Betracht. Beispiele sind Bernsteinsäure, Glutarsäure, Adipinsäure; besonders geeignet sind dimerisierte Fettsäuren. Die Mono- bzw. Dicarbonsäuren können entweder als freie Säuren oder in Form ihrer Ester mit niedrigen Alkoholen wie Methanol, Ethanol, Propanol eingesetzt werden. An Stelle von Fettsäuren lassen sich auch natürlich vorkommende Öle, also deren Glycerinester, einsetzen.

Als Diamine, die pro Molekül eine primäre und eine sekundäre Aminogruppe tragen, wobei die sekundäre Aminogruppe eine $\beta$-Hydroxyalkylgruppe trägt, kommen vor allem solche in Betracht, deren Aminogruppen durch 2 bis 6 Kohlenstoffatome getrennt sind und deren sekundäre Aminogruppe eine $\beta$-Hydroxyethyl-, eine $\beta$-Hydroxypropyl- oder eine $\beta$-Hydroxybutylgruppe trägt. Beispiele sind Aminoethylethanolamin, Aminopropylethanolamin, Aminoethylisopropanolamin und Aminopropylisopropanolamin.

Bei der Umsetzung zwischen Carbonsäuren und primär/sekundären Diaminen wird im allgemeinen ein Mol Amin pro Äquivalent Carbonsäure bzw. Ester eingesetzt, es kann jedoch auch ein geringer Unterschuß an Amin eingesetzt werden, vor allem bei der Umsetzung mit Dicarbonsäuren. Dabei entstehen durch Polykondensation kurzkettige Polyamide mit endständigen Aminogruppen.

Um zu erfindungsgemäß als Komponente (B) verwendbaren Amidaminen zu gelangen, müssen für die Umsetzung mit Carbonsäuren zwingend primär/sekundäre Diamine, deren sekundäre Aminogruppe eine $\beta$-Hydroxialkylgruppe trägt, verwendet werden. Bei Verwendung von anderen Diaminen, z. B. primären Aminen wie Ethylendiamin oder Propylendiamin oder von primär/sekundären Aminen, deren sekundäre Aminogruppe eine Alkylgruppe trägt, führt die Umsetzung mit Carbonsäuren zu einer Mischung aus Diamiden, Amidaminen und freien Diaminen, da die Reaktivitätsunterschiede der einzelnen Aminogruppen in bezug auf die Kondensation mit Carbonsäuren zu gering sind.

Werden Carbonsäuren, bzw. deren Ester dagegen mit primär/sekundären Diaminen, deren sekundäre Aminogruppe eine $\beta$-Hydroxyalkylgruppe trägt, umgesetzt, so reagiert die primäre Aminogruppe bevorzugt. Aus einem Mol Diamin und einem Mol Monocarbonsäure oder deren Ester entsteht dabei fast reines Amidamin mit freien sekundären Aminogruppen; aus einem Mol Dicarbonsäure und 2 Mol Diamin entsteht ein Diamidamin mit 2 sekundären Aminogruppen. Diese speziellen Amidamine werden erfindungsgemäß in Kombination mit Komponente ($A_1$) und/oder Komponente ($A_2$) eingesetzt, um Bindemittel für die kathodische Elektrotauchlackierung herzustellen, die sich durch hohe Elastizität und Schlagfestigkeit auszeichnen.

Die als Komponente (B) einzusetzenden Amidamine können dabei in Mischung mit den Komponenten ($A_1$) und/oder ($A_2$) verwendet werden. In vielen Fällen ist es jedoch vorteilhaft, wenn die Amidamine in eine oder beide der Komponenten ($A_1$) oder ($A_2$) eingebaut werden.

Soll der Einbau in Polymere mit aktivierten Doppelbindungen ($A_2$) erfolgen, kann das Amidamin (B) in einer Michaeladdition an diese Doppelbindungen eingebaut werden. Der Einbau in die Komponente ($A_1$) kann über eine Mannichreaktion erfolgen. Zweckmäßigerweise kann man dabei so vorgehen, daß das Amidamin zusammen mit anderen primären oder sekundären Aminen mit Formaldehyd und Phenolen zu phenolischen Mannichbasen kondensiert wird und diese gegebenenfalls anschließend mit Epoxidharzen umgesetzt werden.

Der Einbau des Amidamins in die Komponente ($A_1$) und auch in die Komponente ($A_2$), sofern als solche mit aktivierten Doppelbindungen modifizierte Epoxidharze, z. B. gemäß DE-OS 2 429 527, DE-OS 2 749 776 oder DE-OS 2 942 488, eingesetzt werden, kann auch über die Reaktion der Aminogruppen des Amidamins mit den Epoxidgruppen der zum Einsatz kommenden Epoxidharze geschehen. Mit den — im wesentlichen difunktionellen — Amidaminen, die aus Dicarbonsäuren erhalten wurden, entstehen dabei kettenverlängerte Epoxidharze. Es lassen sich jedoch auch Amidamine auf Basis von Monocarbonsäuren verwenden, die sich an eine der Epoxidgruppen des Epoxidharzes addieren und somit end- oder seitenständige weichmachende Ketten in das Molekül einbauen.

Selbstverständlich können auch Amidamine aus Dicarbonsäuren und Monocarbonsäuren im Gemisch eingesetzt werden.

Die Menge an eingesetztem Amidamin (B) richtet sich nach den gewünschten mechanischen Eigenschaften der Lackfilme, die sich mit den aus den erfindungsgemäßen Bindemitteln hergestellten Lackbädern gewinnen lassen und liegt zwischen 5 und 50%, bezogen auf die gesamten Bindemittelanteile (A) + (B). Für die meisten Zwecke ist es ausreichend, wenn der Anteil des Amidamins etwa 10 bis 25% beträgt.

Nach Protonierung mit Säuren, wie z. B. Phosphorsäure und ihren Derivaten, vorzugsweise jedoch mit wasserlöslichen Carbonsäuren wie z. B. Essigsäure, Ameisensäure und Milchsäure, sind die erfindungsgemäßen Bindemittel wasserverdünnbar und können für die kathodische Elektrotauchlackierung elektrisch leitender Flächen, z. B. von Metallteilen, Blechen usw. aus Messing, Kupfer, Aluminium, Eisen und Stahl, die gegebenenfalls chemisch vorbehandelt sind, eingesetzt werden.

Die wäßrigen Lösungen oder Dispersionen der zumindest teilweise als Salz einer wasserlöslichen Carbonsäuren vorliegenden Lackbindemittel können zusätzlich weitere, bei der kathodischen Elektrotauchlackierung übliche Hilfsstoffe enthalten, wie Pigmente, lösliche Farbstoffe, organische Lösungsmittel, Verlaufsverbesserer, Stabilisatoren, Härtungskatalysatoren, Antischaummittel sowie andere Hilfs- und Zusatzstoffe.

Die nach dem erfindungsgemäßen Verfahren hergestellten Lackbindemittel können sowohl als Hauptträgerharz für die elektrische Abscheidung als auch als Anreibeharz in einer Pigmentpaste benutzt werden.

Zur kathodischen Elektrotauchlackierung wird im allgemeinen durch Verdünnen mit entionisiertem Wasser ein Feststoffgehalt des Elektrotauchbades von 5 bis 30 Gewichtsprozent eingestellt. Die Abscheidung erfolgt im allgemeinen bei Temperaturen von 15 bis 40° C während einer Zeit von 1 bis 2 Minuten und bei Bad-pH-Werten von 5,0 bis 10, vorzugsweise pH 5,7 bis 8,5, bei Abscheidungsspannungen zwischen 50 und 500 Volt.

Nach dem Abspülen von noch anhaftendem Badmaterial wird der auf dem elektrisch leitenden Körper kathodisch abgeschiedene Film bei erhöhter Temperatur von etwa 140 bis 200° C innerhalb von etwa 10 bis 40 Minuten eingebrannt.

Die erfindungsgemäßen Überzugsmittel ergeben bei der kathodischen Abscheidung sehr guten Umgriff und Überzüge mit hervorragenden mechanischen Eigenschften, wie große Härte und Zähigkeit, bei sehr guter Elastizität und fester Haftung auf dem Substrat.

Weiterhin zeichnen sich die damit erhaltenen Überzüge durch hohe Lösungsmittelbeständigkeit und Korrosionsbeständigkeit, z. B. im Salzsprühtest, aus.

Die in den Beispielen genannten Teile und Prozente sind soweit nicht anders angegeben, Gewichtsteile bzw. Gewichtsprozente.

## Herstellung der Amidamine (B)

### Amidamin I

290 Teile Leinölfettsäure (z. B. ®Nouracid LE 80) und 104 Teile Aminoethylethanolamin wurden innerhalb von 1 Stunde auf 200° C erhitzt. Anschließend wurde 3 $^1/_2$ Stunden bei 200° C gehalten. Es wurden insgesamt 18 Teile Wasser abdestilliert. Das Produkt erstarrte nach dem Abkühlen zu einer wachsartigen Masse und wies einen Gehalt an basischem Stickstoff von 3,5% auf. Davon lagen 3,3% Stickstoff in Form von sekundärem Amin und 0,2% als primäres Amin vor.

### Amidamin II

291 Teile handelsübliche Dimerfettsäure mit geringen Beimengungen an monomeren und trimeren Säuren (z. B. ®Empol 1014) und 104 Teile Aminoethylethanolamin wurden 30 Min. auf 170° C und anschließend 4 Stunden auf 200° C erhitzt. Dabei wurden 18 Teile Wasser abdestilliert. Nach dem Abkühlen wurde ein hochviskoses Öl mit einem Gehalt an basischem Stickstoff von 3,5% erhalten.

## Beispiel 1

### a) Herstellung eines Ethergruppen enthaltenden phenolgruppenhaltigen Vorproduktes

Es werden 420 Teile eines Triglycidylethers aus Pentaerythrit und Epichlorhydrin mit einem Epoxidwert von 0,62 und 73,2 Teile Phenol 30 Minuten bei 180° C gerührt. Dann erfolgt die Zugabe von 364,6 Teilen Bisphenol A. Dann läßt man 1 Stunde bei 180° C nachreagieren. Anschließend verdünnt man mit 420 Teilen Toluol. Der Feststoffgehalt beträgt 67,8%.

### b) Tscherniac-Einhorn/Michael-Reaktion

430 Teile des unter a) hergestellten Produktes, 136,5 Teile Acrylamid, 79,7 Teile Paraformaldehyd, 91 Teile p.-tert.-Butylphenyl, 0,4 Teile Phenothiazin und 78 Teile Bisphenol A werden bei 115° C gelöst. Man kühlt dann auf 60° C und gibt 1 Teil Bortrifluoridethyletherat zu. Nach 30 Minuten Reaktion bei 60° C erfolgt die zweite Zugabe von 1 Teil Bortrifluoridethyletherat und nach weiteren 30 Minuten bei 60° C werden noch 0,7 Teile Bortrifluoridethyletherat zugegeben. Man läßt 3 Stunden unter Rühren bei 60° C nachreagieren. Anschließend wird bei 120° C das Wasser ausgekreist. Danach tropft man bei

90° C 202 Teile Diethanolamin zu, läßt noch 2 Stunden bei 90° C nachreagieren und verdünnt dann mit 29,4 Teilen Isobutanol, 29,4 Teilen Isopropanol, 110 Teilen Butylglykol und 110 Teilen Ethylglykol. Der Feststoffgehalt beträgt 67,3%.

c) Herstellung des Elektrotauchlackbindemittels

Es werden 252,6 Teile des unter b) hergestellten Produktes, 33,5 Teile Paraformaldehyd, 125 Teile Bisphenol A, 37,3 Teile Diethanolamin, 40 Teile Dibutylamin, 50 Teile Amidamin II und 60 Teile Isobutanol 15 Minuten bei 50° C und anschließend 2,5 Stunden bei 80° C gerührt. Dann erfolgt die Zugabe von 137,3 Teilen eines Diglycidylethers aus Bisphenol A und Epichlorhydrin mit einem Epoxidwert von 0,2, 54,7 Teilen eines Triglycidylethers aus Pentaerythrit und Epichlorhydrin mit einem Epoxidwert von 0,62, und 60 Teilen Isobutanol. Bei 70° C läßt man nachreagieren bis eine Viskosität von 1200 mPas (gemessen bei 75° C mit dem ICI-Platte-Konus-Viskosimeter) erreicht ist. Schließlich wird mit 50 Teilen Isobutanol verdünnt. Der Feststoffgehalt beträgt 71,6%.

d) Elektrotauchlackierung und Prüfung

Zur Herstellung eines 10%igen Lackbades werden 100 Teile des Festharzes c), 100 ppm $Cu^{++}$ (berechnet auf Badvolumen) als Kupferacetatlösung und 5 Teile Isodecanol gut gemischt, mit 1,6% Essigsäure (berechnet auf Festharz) protoniert und mit vollentsalztem Wasser auf 1000 Teile aufgefüllt. Das Lackbad wird dann 48 Stunden bei 30° C gerührt; es hat nach dem Ausrühren einen pH-Wert von 7,25 und einen Leitwert von 950 $\mu S \cdot cm^{-1}$. Auf phosphatierten, als Kathode geschalteten Stahlblechen erhält man nach der Abscheidung (2 Minuten bei 165 Volt und 30° C) und Härtung (20 Minuten bei 180° C) einen glatten Überzug mit einer Schichtdicke von 15 µm, der eine Erichsentiefung von 9 mm aufweist.

Beispiel 2

In einen Rührkessel wurden nacheinander 600 Teile Phenol, 485 Teile Bisphenol A, 1000 Teile Acrylamid, 490 Teile Paraformaldehyd und 1 Teil 2,6-Di-tert.-butyl-p-kresol eingefüllt und unter Rühren auf 120°C erhitzt, bis eine klare Lösung entstanden war. Dann wurde abgekühlt und bei 50°C 10 Teile Bortrifluoriddimethyletherat zugegeben. Unter Kühlen wurde die Temperatur bei 50°C gehalten, bis die Reaktion abgeklungen war. Anschließend wurde auf 100°C erhitzt und 30 Minuten bei dieser Temperatur gehalten, wobei das Reaktionswasser unter vermindertem Druck abdestilliert wurde. Anschließend wurde mit 1000 Teilen Isobutanol verdünnt. Das Produkt hatte einen Feststoffgehalt von 70%.

Zu 157,5 Teilen dieses Produkts wurden 40 Teile des Amidamins I, 40 Teile Diethanolamin und 0,1 Teile 2,6-Di-tert.-butyl-p-kresol gegeben und 1 Stunde auf 80°C erwärmt. Dann wurden 120 Teile eines Epoxidharzes auf Basis von Bisphenol A und Epichlorhydrin mit einem Epoxidäquivalentgewicht von 190 (z. B. ®Epikote 828) und 93 Teile Isopropanol zugegeben und 15 Stunden auf 85° C erhitzt. Nach Zugabe von 10 Teilen Essigsäure war das Produkt wasserverdünnbar. Es wurde unter Rühren langsam 2500 Teile Wasser zugefügt und so eine stabile wäßrige Dispersion mit einem pH-Wert von 6,5 und einem Festgehalt von 11% erhalten.

Vergleichsbeispiel zu Beispiel 2

Es wurde wie unter Beispiel 2 verfahren, jedoch ohne Zusatz von 40 Teilen des Amidamins I. Durch Zugabe von 10 Teilen Essigsäure und 2100 Teilen Wasser wurde eine stabile wäßrige Dispersion hergestellt.

Die nach Beispiel 2 und dem Vergleichsbeispiel erhaltenen Dispersionen wurden 24 Stunden bei 30° C gerührt. Dann wurden jeweils 200 ppm Blei in Form von Bleiacetat zugegeben. Mit diesen Bädern wurden dann sowohl zinkphosphatierte Bleche ohne passivierende Nachspülung als auch entfettete Stahlbleche beschichtet. Die Filme wurden 20 Minuten bei 180°C eingebrannt. Es wurden folgende Ergebnisse erhalten:

| | Beispiel 2 | Vergleichsbeispiel |
|---|---|---|
| Abscheidebedingungen: | | |
| zinkphosphatiert | 2 Min./280 V | 2 Min./180 V |
| entfettetes Blech | 2 Min./120 V | 2 Min./120 V |
| Schichtstärken: | | |
| zinkphosphatiert | 15 µm | 15 µm |
| entfettetes Stahlblech | 18 µm | 18 µm |
| Salzsprühtest nach ASTM 480 h: | | |
| zinkphosphatiert | 1 mm | 1 mm |
| entfettetes Stahlblech | 2 mm | 2 mm |
| Erichsentiefung: | | |
| zinkphosphatiert | 9 mm | 5 mm |
| Umgriff Fordzelle | 18 cm | 13 cm |

Beispiel 3

Es wurde ein Harz analog dem Beispiel 6 der DE-OS 2 357 075 hergestellt, dabei wurde jedoch anstatt 309 Teilen Di-n-hexylamin ein Gemisch aus 250 Teilen des Amidamins I und 100 Teilen Di-n-butylamin verwendet.

Vergleichsbeispiel zu Beispiel 3

Es wurde das Beispiel 6 der DE-OS 2 357 075 wiederholt.

Aus beiden Harzen wurde wie in der DE-OS 2 357 075 beschrieben, 10%ige Dispersionen hergestellt, denen 50 ppm Kupfer in Form von Kupferacetat zugesetzt wurden. Damit wurden zinkphosphatierte Bleche kataphoretisch beschichtet. Beim Einbrennen trat beim erfindungsgemäßen Beispiel 3 ein Verlust von 7% auf, der eingebrannte Lackfilm war glatt und glänzend und erreichte eine Erichsentiefung von 9 mm. Beim Vergleichsbeispiel trat ein Einbrennverlust von 13% auf und die Erichsentiefung betrug 7 mm.

**Patentansprüche**

1. Lackbindemittel für die kathodische Elektrotauchlackierung auf Basis stickstoffbasische Gruppen tragender Polyadditions-, Polymerisations- und/oder Polykondensationsprodukte, die durch Protonierung mit Säure wasserverdünnbar sind, dadurch gekennzeichnet, daß das Lackbindemittel besteht aus einem Gemisch aus

(A) 50 bis 95 Gewichtsprozent eines oder mehrerer stickstoffbasische Gruppen tragender Polyadditions-, Polymerisations- und/oder Polykondensationsprodukte, und
(B) 50 bis 5 Gewichtsprozent eines oder mehrerer Amidamine, die durch Umsetzung von Monocarbonsäuren mit 6 bis 24 Kohlenstoffatomen und/oder Dicarbonsäuren mit 4 bis 48 Kohlenstoffatomen oder deren Estern mit Diaminen, die pro Molekül eine primäre und eine sekundäre Aminogruppe tragen, wobei die sekundäre Aminogruppe eine $\beta$-Hydroxialkylgruppe trägt, erhalten worden sind,

mit der Maßgabe, daß das stickstoffbasische Gruppen tragende Polyadditions-, Polymerisations- und/oder Polykondensationsprodukt (A) aus

($A_1$) einer oder mehreren phenolischen Mannichbasen, die erhalten wurden aus

a) Mono- und/oder Polyphenolen,
b) mindestens einem primären oder sekundären Amin, und
c) Formaldehyd oder einer formaldehydliefernden Verbindung,

und die gegebenenfalls mit Epoxidharzen umgesetzt wurden, und/oder

($A_2$) einem oder mehreren Polyadditions-, Polymerisations- und/oder Polykondensationsprodukten mit aktivierten C-C-Doppelbindungen, wobei diese Doppelbindungen ganz oder teilweise durch Anlagerung von sekundären Aminen blockiert sein können, besteht,

wobei anstelle des Gemisches aus (A) und (B) auch Umsetzungsprodukte der Komponente (B) mit Komponente (A) oder Vorprodukten der Komponente (A) verwendet werden können.

2. Lackbindemittel nach Anspruch 1, dadurch gekennzeichnet, daß es aus einem Gemisch aus 75 bis 90 Gewichtsprozent der Komponente (A) und 10 bis 25 Gewichtsprozent der Komponente (B) besteht.

3. Lackbindemittel nach Anspruch 1 oder 2, dadurch gekennzeichnet, daß als Komponente (B) ein Amidamin verwendet wird, das durch Umsetzung von Leinölfettsäure mit einem Diamin, dessen Aminogruppen durch 2 bis 6 Kohlenstoffatome getrennt sind und deren sekundäre Aminogruppe eine $\beta$-Hydroxyethyl-, eine $\beta$-Hydroxypropyl- oder eine $\beta$-Hydroxybutylgruppe trägt, erhalten worden ist.

4. Lackbindemittel nach Anspruch 1 oder 2, dadurch gekennzeichnet, daß als Komponente (B) ein Amidamin verwendet wird, das durch Umsetzung handelsüblicher Dimerfettsäuren mit einem Diamin, dessen Aminogruppen durch 2 bis 6 Kohlenstoffatome getrennt sind, und deren sekundäre Aminogruppe eine $\beta$-Hydroxyethyl-, eine $\beta$-Hydroxypropyl- oder eine $\beta$-Hydroxybutylgruppe trägt, erhalten worden ist.

5. Lackbindemittel nach Anspruch 3, dadurch gekennzeichnet, daß als Komponente (B) ein Umsetzungsprodukt von Leinölfettsäure mit einem Diamin aus der Gruppe bestehend aus Aminoethylethanolamin, Aminopropylethanolamin, Aminoethylisopropanolamin und Aminopropylisopropanolamin, verwendet wird.

6. Lackbindemittel nach Anspruch 4, dadurch gekennzeichnet, daß als Komponente (B) ein Umsetzungsprodukt handelsüblicher Dimerfettsäuren mit einem Diamin aus der Gruppe bestehend aus Aminoethylethanolamin, Aminopropylethanolamin, Aminoethylisopropanolamin und Aminopropylisopropanolamin, verwendet wird.

7. Verwendung der Lackbindemittel nach einem der vorhergehenden Ansprüche für die kathodische Elektrotauchlackierung von Metallteilen.

**Claims**

1. A cathodic electrocoating binder which is based on polyadducts, polymers and/or polycondensates possessing basic nitrogen groups in each case, and can be diluted with water when protonated with an acid, wherein the binder consists of a mixture of

(A) from 50 to 95 per cent by weight of one or more polyadducts, polymers and/or polycondensates which possess basic nitrogen groups in each case, and
(B) from 50 to 5 per cent by weight of one or more amide-amines obtained by reacting a monocarboxylic acid of 6 to 24 carbon atoms and/or a dicarboxylic acid of 4 to 48 carbon atoms, or their esters, with a diamine which possesses one primary and one secondary amino group per molecule, the secondary amino group bearing a $\beta$-hydroxyalkyl group,

with the proviso that the polyadduct, polymer, and/or polycondensate possessing basic nitrogen groups consists of

($A_1$) one or more phenolic Mannich bases, which have been obtained from

a) monophenols and/or polyphenols,
b) one or more primary or secondary amines, and
c) formaldehyde or a formaldehyde donor,

and may or may not have been reacted with an epoxy resin, and/or

($A_2$) one or more polyadducts, polymers or polycondensates which have activated C-C double bonds, some or all of which can be blocked by adduct formation with a secondary amine, and, instead of a mixture of (A) and (B), the reaction product of component (B) with component (A) or with an intermediate of component (A) can also be used.

2. A surface coating binder as claimed in claim 1, which consists of a mixture of from 75 to 90 per cent

by weight of component (A) and from 10 to 25 per cent by weight of component (B).

3. A surface coating binder as claimed in claim 1 or 2, wherein component (B) is an amide-amine obtained by reacting linseed oil fatty acid with a diamine whose amino groups are separated by 2 to 6 carbon atoms and whose secondary amino group bears a $\beta$-hydroxyethyl, $\beta$-hydroxypropyl or $\beta$-hydroxybutyl group.

4. A surface coating binder as claimed in claim 1 or 2, wherein component (B) is an amide-amine obtained by reacting a commercial dimeric fatty acid with a diamine whose amino groups are separated by 2 to 6 carbon atoms and whose secondary amino group bears a $\beta$-hydroxyethyl, $\beta$-hydroxypropyl or $\beta$-hydroxybutyl group.

5. A surface coating binder as claimed in claim 3, wherein component (B) is a product obtained by reacting linseed oil fatty acid with a diamine from the group comprising amino-ethylethanolamine, aminopropylethanolamine, aminoethylisopropanolamine and aminopropylisopropanolamine.

6. A surface coating binder as claimed in claim 4, wherein component (B) is a product obtained by reacting a commercial dimeric fatty acid with a diamine from the group comprising aminoethylethanolamine, aminopropylethanolamine, aminoethylisopropanolamine and aminopropylisopropanolamine.

7. The use of a surface coating binder as claimed in any of the preceding claims for the cathodic electrocoating of metal articles.

**Revendications**

1. Liant de vernis pour la peinture par électrodéposition cathodique, à base de produits de polyaddition, polymérisation et/ou polycondensation, porteurs de groupes basiques azotés qui sont diluables dans l'eau par protonation avec un acide, caractérisé par le fait que le liant de vernis est constitué par un mélange de

(A) 50 à 95% en poids d'un ou plusieurs produits de polyaddition, polymérisation et/ou polycondensation, porteurs de groupes basiques azotés

(B) 50 à 5% en poids d'une ou plusieurs amidamines, qui ont été obtenues par réaction d'acides monocarboxyliques ayant 6 à 24 atomes de carbone et/ou d'acides dicarboxyliques ayant 4 a 48 atomes de carbone, ou leurs esters, avec des diamines, qui portent, par molécule, un groupe amino primaire et un groupe amino secondaire, le groupe amino secondaire portant un groupe $\beta$-hydroxyalkyle, sous réserve que le produit de polyaddition, polymérisation, et/ou polycondensation (A), portant des groupes basiques azotés, soit constitué par

($A_1$) une ou plusieurs bases de Mannich phénoliques qui ont été obtenues à partir de

a) mono- et/ou polyphénols,
b) au moins une amine primaire ou secondaire,
c) formaldéhyde ou un composé générateur de formaldéhyde

et que l'on a fait réagir éventuellement avec des résines époxydes

($A_2$) un ou plusieurs produits de polyaddition, polymérisation, et/ou polycondensation, a doubles liaisons C-C activées, ces doubles liaisons pouvant être bloquées totalement ou partiellement par addition d'amines secondaires,

des produits de réaction du composant (B) avec le composant (A) ou des produits intermediaires du composant (A) pouvant être utilisés à la place du mélange de (A) et (B).

2. Liant de vernis selon la revendication 1, caractérisé par le fait qu'il est constitué par un melange de 75 à 90% en poids du composant (A) et 10 à 25% en poids du composant (B).

3. Liant de vernis selon la revendication 1 ou 2, caractérisé par le fait qu'on utilise, comme composant (B), une amidamine qui a été obtenue par réaction d'acide linoléique avec une diamine, dont les groupes amino sont séparés par 2 à 6 atomes de carbone et dont le groupe amine secondaire porte un groupe $\beta$-hydroxyéthyle, un groupe $\beta$-hydroxypropyle ou un groupe $\beta$-hydroxybutyle.

4. Liant de vernis selon la revendication 1 ou 2, caractérisé par le fait qu'on utilise, comme composant (B), une amidamine qui a été obtenue par réaction d'acides gras dimères du commerce avec une diamine, dont les groupes amino sont séparés par 2 à 6 atomes de carbone et dont le groupe amino secondaire porte un groupe $\beta$-hydroxyéthyle, un groupe $\beta$-hydroxypropyle ou un groupe $\beta$-hydroxybutyle.

5. Liant de vernis selon la revendication 3, caractérisé par le fait qu'on utilise, comme composant (B), un produit de réaction d'acide linoléique avec une diamine appartenant au groupe constitue d'aminoé-

thyléthanolamine, aminopropyléthanolamine, aminoéthylisopropanolamine et aminopropylisopropanolamine.

6. Liant de vernis selon la revendication 3, caractérisé par le fait qu'on utilise, comme composant (B), un produit de réaction d'acides gras dimères du commerce avec une diamine appartenant au groupe constitué d'aminoéthyléthanolamine, aminopropyléthanolamine, aminoéthylisopropanolamine et aminopropylisopropanolamine.

7. Utilisation du liant de vernis selon l'une des revendications précédentes pour la peinture par électrodéposition cathodique de pièces métalliques.